# EUROPEAN PATENT SPECIFICATION

(11) **EP 2 447 809 B1**
(45) Date of publication and mention of the grant of the patent: **19.09.2018**
(21) Application number: 11186899.8
(22) Date of filing: 27.10.2011
(51) Int. Cl.: G06F 3/01, G06K 9/00, H04M 1/725

(54) **User device and method of recognizing user context**
Benutzervorrichtung und Verfahren zur Erkennung von Benutzerkontext
Dispositif d'utilisateur et procédé de reconnaissance du contexte de l'utilisateur

(30) Priority: 27.10.2010 KR 20100105091
(43) Date of publication of application: 02.05.2012
(73) Proprietor: Samsung SDS Co., Ltd., Seoul 135-082 (KR)
(72) Inventor: Kwon, Saehyung, 133-766 Seoul (KR); Kim, Daehyun, 448-765 Gyonggi-do (KR); Yang, Jaeyoung, 427-739 Gyeonggi-do (KR); Lee, Sejin, 465-031 Gyeonggi-do (KR)
(74) Representative: Grünecker Patent- und Rechtsanwälte PartG mbB

(56) References cited:
- EP-A2- 1 732 300
- US-A1- 2005 068 171
- US-A1- 2008 036 591
- US-A1- 2009 224 867

## Description

### BACKGROUND

### 1. Field

Apparatuses and methods consistent with exemplary embodiments relate to a user device and a method of recognizing a user context of the user device, and more particularly, to a user device a user device for recognizing a behavior of a user by using sensors included therein and for providing an appropriate service for the behavior, a method of recognizing a user context, and a method of providing a service.

### 2. Description of the Related Art

A smart phone is one of portable information technology (IT) devices and provides various services such as a processing function and a network function as well as a basic telephone function by using sensors. Users of smart phones can easily search for necessary information through a network, can communicate with friends through a social network service (SNS), and can watch movies or videos.

A smart phone provides a navigation service by using sensors installed therein so as to guide a user and to show a current context of the user. It can provide various services by obtaining and processing user information from possible sensors. However, it is not easy to implement a system identifying user information from complex sensors the system requires many mathematical models and machine learning algorithms.

Document US 2005/0068171 A1 describes a wearable security system. The wearable security system monitors an environment and comprises a decisioning engine, a plurality of sensors, a user feedback component, a communications component, a spatial location component, and a device control component. An external sensor networks comprises a camera, an audio sensor, a satellite sensor, and a chemical sensor. External sensor networks provide a link to a larger sensor environment for wearable security system. Document US 2009/0224867 A1 is directed to context aware data processing in a mobile computing device. However, the context aware data processing requires a plurality of sensors and complex statistical analysis. Document EP 1 732 300 A2 is directed at a method, program and information processing device for sensing called party activity. Presence state information is obtained, for example, by a microphone (sound volume), the output of a clock (daytime), the output of an acceleration sensor (movement) and a gyro sensor. Document US 2008/036591 A describes methods and an apparatus for an environmental and behavioral adaptive wireless communication device.

### SUMMARY

The invention provides a method of recognizing a user context according to claim 1 and a user device for recognizing a user context according to claim 9. One or more exemplary embodiments provide a user device for recognizing a behavior of a user by using sensors included therein and for providing an appropriate service for the behavior, a method of recognizing a user context, and a method of providing a service.

According to an aspect of an exemplary embodiment, there is a method of recognizing a user context, the method including recognizing at least one behavior generated by an object by analyzing a signal obtained by at least one sensor from among a plurality of sensors included in a user device; and recognizing a current context of the user by analyzing a pattern of the at least one behavior.

According to another aspect of an exemplary embodiment, there is a user device for recognizing a user context, the user device including a sensor unit comprising a plurality of sensors; a unit behavior recognizing unit for recognizing unit behaviors that are sequentially generated by an object by analyzing a signal obtained by at least one sensor from among the plurality of sensors; and a context recognizing unit for recognizing a current context of the user by analyzing a pattern of the unit behaviors.

According to another aspect of an exemplary embodiment, there is a method of setting a user context, the method including extracting feature values corresponding to unit behaviors that are sequentially performed by a user by analyzing signals obtained by sensing the unit behaviors; generating unit behavior models by setting unit behaviors that respectively correspond to the feature values; and setting a special meaningful situation to a reference state transition graph formed by combining the unit behaviors.

According to another aspect of an exemplary embodiment, there is a user device for setting a user context, the user device including an feature value extracting unit for extracting feature values corresponding to unit behaviors that are sequentially performed by a user by analyzing signals obtained by sensing the unit behaviors; a unit behavior setting unit for generating unit behavior models by setting unit behaviors that respectively correspond to the feature values; and a context setting unit for setting a special meaningful situation to a reference state transition graph formed by combining the unit behaviors.

According to another aspect of an exemplary embodiment, there is provided a computer readable recording medium having recorded thereon a program for executing any one of the above-described methods.

Embodiments can include any, all or none of the following advantages:
A user behavior collected through mobile devices such as smart phone may be analyzed in real time and an appropriate service for the behavior may be provided according to the analysis result.

Life logging of a user may be achieved by using a user device only. In this case, sensed behaviors or context of the user may be used as metadata.

Behavior-based monitoring technologies may be provided to an industrial environment requiring monitoring.

In addition, by recognizing a current behavior or context of a user, a new advertisement platform provides appropriate advertisement based on analyzing current user behaviors or context.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a first user device for recognizing a current context of a user, according to an exemplary embodiment;
FIG. 2 is a graph that is obtained by converting an original signal provided from an angular velocity sensor, according to an exemplary embodiment;
FIG. 3 is a graph that is obtained by converting an angular velocity signal by using a power spectrum method, according to an exemplary embodiment;
FIG. 4 shows reference state transition graphs and context information mapped therewith, which are stored in a first storage unit, according to an exemplary embodiment
FIG. 5 is a block diagram of a second user device for setting a context for each respective unit behavior of a user, according to another exemplary embodiment;
FIG. 6 is a flowchart of a method of recognizing a user context, which is performed by a user device, according to an exemplary embodiment; and
FIG. 7 is a flowchart of a method of setting a user context, which is performed by a user device, according to an exemplary embodiment.

### DETAILED DESCRIPTION OF EXEMPLARY EMBODIMENTS

Exemplary embodiments will now be described more fully with reference to the accompanying drawings to clarify aspects, features and advantages of the inventive concept. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art. It will be understood that when an element, layer or region is referred to as being "on" another element, layer or region, the element, layer or region can be directly on another element, layer or region or intervening elements, layers or regions.

Also, it will be understood that when a first element (or first component) is referred to as being operated or executed "on" a second element (or second component), the first element (or first component) can be operated or executed in an environment where the second element (or second component) is operated or executed or can be operated or executed by interacting with the second element (or second component) directly or indirectly.

Also, it will be understood that when an element, component, apparatus or system is referred to as comprising a component consisting of a program or software, the element, component, apparatus or system can comprise hardware (for example, a memory or a central processing unit (CPU)) necessary for executing or operating the program or software or another program or software (for example, a operating system (OS), a driver necessary for driving hardware), unless the context clearly indicates otherwise.

Also, it will be understood that an element (or component) can be realized by software, hardware, or software and hardware, unless the context clearly indicates otherwise.

The terms used herein are for the purpose of describing particular exemplary embodiments only and are not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, layers, regions, elements, components, and/or groups thereof, but do not preclude the presence or addition of one or more other features, integers, steps, operations, layers, regions, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

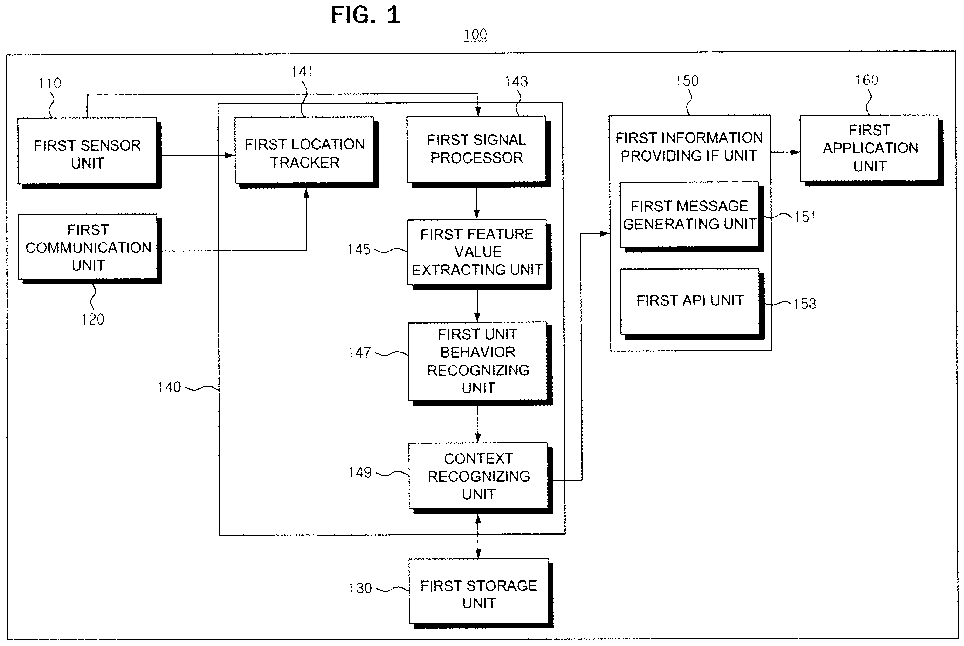

FIG. 1 is a block diagram of a first user device 100 for recognizing a current context of a user, according to an exemplary embodiment.

The first user device 100 of FIG. 1 is a device which has a capability of wire and wireless communication. The first user device 100 may recognize a user context by using a plurality of sensors and may provide an appropriate service according to the recognized user context. Examples of the first user device 100 may include any communicable electronic device such as smart phones, tablet PCs , lap-top computers, or the like.

According to an exemplary embodiment, when a user device recognizes a current context of a user, the current context is determined by recognizing a behavior of an object. In this case, the "object" includes at least one of a user who uses the device , a third party other than the user, and an object.

For example, the first user device 100 may recognizes the user context by recognizing a behavior of the user of the first user device 100, a behavior of a third party (e.g., a robber or a thief) other than the user of the first user device 100, a motion of an object (e.g., an automobile or a motorcycle). Hereinafter, a case where the user context is recognized according to a behavior of the user of the first user device 100 will be described with reference to FIG. 1.

Referring to FIG. 1, the first user device 100 may include a first sensor unit 110, a first communication unit 120, a first storage unit 130, a first context recognizing module 140, a first information providing interface (IF) unit 150, and a first application unit 160.

The first sensor unit 110 may include a plurality of sensors for sensing the behavior of the user of the first user device 100. The first sensor unit 110 may provide a signal that is sensed by at least one sensor from among the sensors to the first context recognizing module 140. The first sensor unit 110 may include various types of sensors such as a location sensor, an acceleration sensor, an angular velocity sensor, a digital compass, an illumination sensor, a proximity sensor, an audio sensor, or the like.

The first sensor unit 110 may further include a camera. For example, the first sensor unit 110 may capture a background of the first user device 100.

The location sensor senses a current location of the first user device 100. Examples of the location sensor may include a global positioning system (GPS) sensor, a position sensitive device (PSD) sensor, or the like. The acceleration sensor senses accelerations with respect to the X axis, the Y axis, and the Z axis, and degrees by which the first user device 100 is inclined in X-axis, Y-axis, and Z axis directions. The acceleration sensor may sense a direction in which the first user device 100 rotates with respect to a predetermined reference direction. The digital compass determines north, south, east, and west and may sense a location of the first user device 100 based on north, south, east, and west. The illumination sensor may sense the brightness of a current place where the first user device 100 is positioned. The proximity sensor may sense whether an object adjacent to the first user device 100 is present without any mechanical contact with the object by using electronic system. The audio sensor may sense surrounding noise of the first user device 100, a conversation state of the user, or the like.

The first communication unit 120 may provide a wired or wireless communication interface through a network, a base station, or the like. For example, the first communication unit 120 may provide various communication interfaces for providing various communication services, such as a Bluetooth function, a Wi-Fi function, a 3G network service function, or the like, but is not limited thereto. The first communication unit 120 may communicate with a base station in order to provide a Wi-Fi function and may further obtain information regarding a current location according to a communication result with the base station.

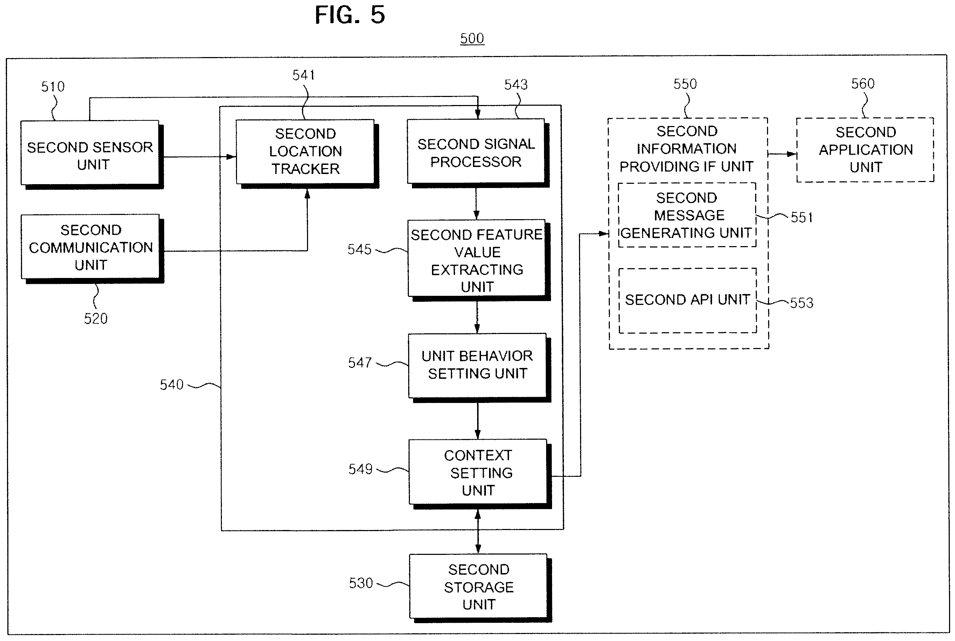

The first storage unit 130 stores reference state transition graphs including at least one unit behavior group and context information mapped with the reference state transition graphs. The reference state transition graphs and the context information corresponding thereto may be obtained from an experiment during design of the first user device 100, which will be described in detail with reference to FIG. 5.

The first context recognizing module 140 may recognize unit behaviors of a user by processing and analyzing signals provided from at least one from among the sensors of the first sensor unit 110 and may recognize the current context of the user by combining the recognized unit behaviors.

The first context recognizing module 140 may include a first location tracker 141, a first signal processor 143, a first feature value extracting unit 145, a first unit behavior recognizing unit 147, and a context recognizing unit 149.

The first location tracker 141 may track a current location of a user by analyzing a signal that is provided from a location sensor for sensing a current location of a user from among a plurality of sensors or the first communication unit 120 in real time. The first location tracker 141 may provide information regarding the current location of the user, which is tracked in real time, to the context recognizing unit 149. In addition, the first location tracker 141 may separately store and manage a place where the user frequently visits by tracking the current location of the user and may provide information about the place to the context recognizing unit 149.

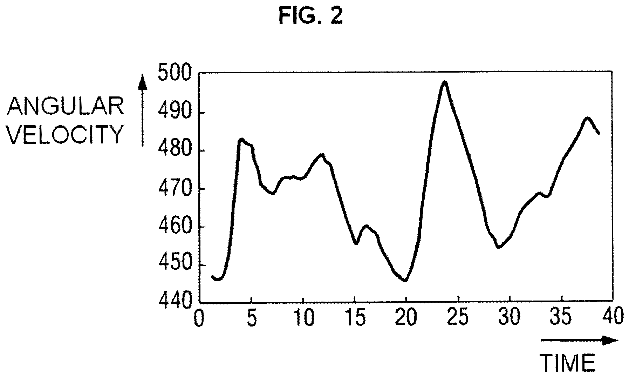

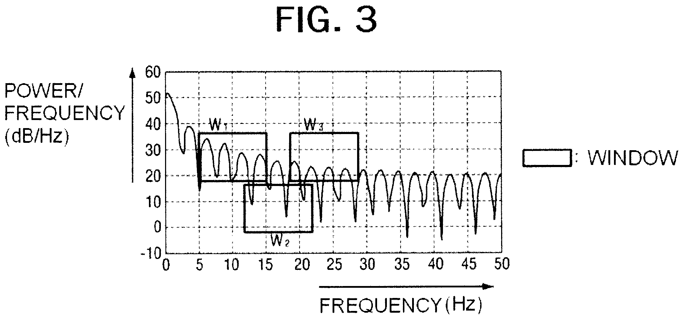

The first signal processor 143 may remove noise by processing an original signal provided from at least one sensor from among a plurality of sensors. FIG. 2 is a graph that is obtained by converting an original signal (hereinafter, referred to as an 'angular velocity signal') provided from an angular velocity sensor, according to an exemplary embodiment. FIG. 3 is a graph that is obtained by converting an angular velocity signal by using a power spectrum method, according to an exemplary embodiment. The angular velocity sensor may provide angular velocity signals with respect to axes (e.g., the x axis, the y axis, and the z axis). The angular velocity signals may contain noises, as shown in FIG. 2. Thus, the first signal processor 143 may apply the power spectrum method to the angular velocity signals so as to output spectrum values, from which noises are removed, for respective frequencies, as shown in FIG. 3. The spectrum values refer to a relationship (power/frequency (dB/Hz)) between power and frequency.

The first feature value extracting unit 145 may extract a feature value from a signal obtained by at least one sensor or a signal input from the first signal processor 143. The feature value indicates a unit behavior of a user and varies according to each respective unit behavior.

Hereinafter, a method of extracting a feature value will be described with reference to FIG. 3. The first feature value extracting unit 145 applies a window to a signal that is converted as shown in FIG. 3 and extracts a feature value by using any one of the following methods. The first feature value extracting unit 145 divides a signal containing spectrum values into m windows in order to minimize a number of calculation operating and errors. The first feature value extracting unit 145 may divide the signal so that predetermined portions of the windows may overlap with each other and may provide an error smoothing effect. FIG. 3 shows first through third windows W₁, W₂, and W₃.

First, the first feature value extracting unit 145 may use an average value of the spectrum values as feature values in the first through third windows W₁, W₂, and W₃, respectively. Thus, when a signal is divided into m windows, m features values may be extracted.

Second, the first feature value extracting unit 145 may extract a variation transition of a spectrum value as feature values in each window period. That is, the first feature value extracting unit 145 may determine whether the spectrum value is increased or reduced in each window period and may extract the amounts of variation as the feature values.

Third, the first feature value extracting unit 145 may extract a maximum value and a minimum value as the feature values in each window period.

Referring back to FIG. 1, the first unit behavior recognizing unit 147 may recognize unit behaviors that are sequentially generated by the user by analyzing a signal obtained by at least one sensor from among a plurality of sensors. A unit behavior refers to a unit of a motion of a user, such as walking, running, sitting, a stop, or the like.

In detail, the first unit behavior recognizing unit 147 may recognize unit behaviors by analyzing feature values that are continuously extracted by the first feature value extracting unit 145 and are input to the first unit behavior recognizing unit 147. The first unit behavior recognizing unit 147 may recognize the unit behaviors corresponding to the extracted feature values by comparing the extracted feature values with a unit behavior model that is previously set. That is, the first unit behavior recognizing unit 147 may recognize the unit behaviors by projecting the extracted feature values to the unit behavior model and using a linear discrimination analysis method.

The unit behavior model is a feature space in which unit behaviors generated by a user are respectively mapped with feature values corresponding to the unit behaviors. The unit behavior model may be information that is obtained from an experiment during design of the first user device 100, which will be described in detail with reference to FIG. 5.

Hereinafter, a unit behavior that is recognized by the first unit behavior recognizing unit 147 according to a type of a signal sensed by the first sensor unit 110 will be described.

When feature values are extracted from a signal that is sensed by at least one sensor of an acceleration sensor and a digital compass from among a plurality of sensors, the first unit behavior recognizing unit 147 may recognize a unit behavior including at least one from among sitting, walking, running, a stop, being in transportation, and walking upstairs.

When feature values are extracted from an audio sensor from among a plurality of sensors, the first unit behavior recognizing unit 147 may recognize whether a user has a conversation and a degree of surrounding noise and may recognize a unit behavior that is the conversation or a unit behavior corresponding to the surrounding noise.

In addition, when feature values are extracted from at least one sensor of an illumination sensor and a proximity sensor from among a plurality of sensors, the first unit behavior recognizing unit 147 may recognize, as a unit behavior, a behavior that is recognized according to the brightness of a place where a user is currently located or a behavior of handling a user device.

If the first feature value extracting unit 145 does not have the above-described functions, the first unit behavior recognizing unit 147 may recognize unit behaviors by using values that are converted by using the power spectrum method, as shown in FIG. 3.

The context recognizing unit 149 may analyze a pattern of unit behaviors recognized by the first unit behavior recognizing unit 147 and may recognize the current context of the user by using at least one of the following four methods.

First, the context recognizing unit 149 may generate a state transition graph by combining recognized unit behaviors and may recognize the current context of the user from context information corresponding to a reference state transition graph that is most similar to the generated state transition graph, from among reference state transition graphs that are previously set.

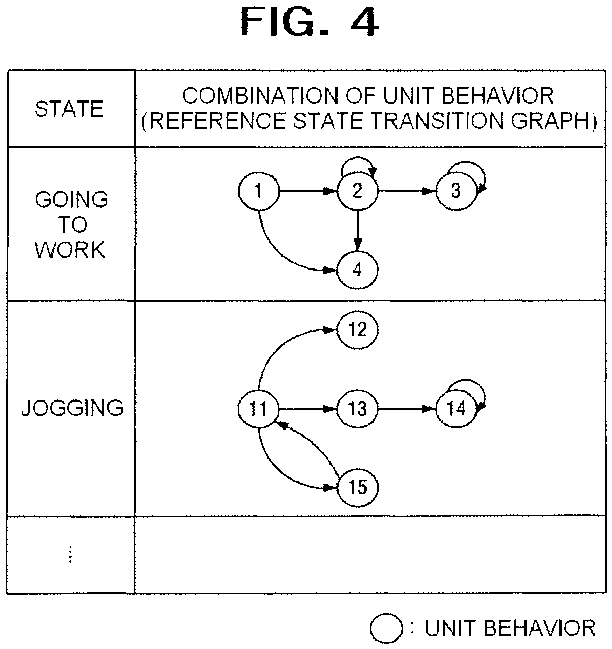

FIG. 4 shows reference state transition graphs and context information mapped therewith, which are stored in the first storage unit 130, according to an exemplary embodiment.

Referring to FIG. 4, a first reference state transition graph has a combination of unit behaviors, in which a first unit behavior 1 is recognized and then a second unit behavior 2 and a third unit behavior 3 are recognized, or the first unit behavior 1 is recognized and then a fourth unit behavior 4 is recognized. Thus, if a state transition graph generated by the context recognizing unit 149 is the same or most similar as the first reference state transition graph, the context recognizing unit 149 may recognize the current context of the user as 'going to work'. A second reference state transition graph includes a combination of 11^{th} through 15^{th} unit behaviors 11 to 15. A method of recognizing the current context of the user is similar to a case of the 'going to work' and thus will not be described in detail.

In this case, when the context recognizing unit 149 recognizes the same unit behavior repeatedly, the context recognizing unit 149 may recognize the current context of the user in consideration of a period of time when the same unit behavior is recognized repeatedly. For example, in the case that a threshold value that is set with respect to the first unit behavior 1 is 20 minutes, if the generated state transition graph is the same as the first reference state transition graph, but a period of time when the first unit behavior 1 is repeatedly recognized exceeds 20 minutes, the context recognizing unit 149 may recognize another context other than the 'going to work' as the current context of the user.

Second, the context recognizing unit 149 may recognize the current context of the user by using a unit behavior that is recognized at a predetermined location from among locations that are tracked by the first location tracker 141. That is, the context recognizing unit 149 may set a motion of the user as a meaningful behavior or may recognize the current context by combining the tracked places with the recognized unit behaviors. For example, the context recognizing unit 149 may set a place where the user frequently visits as a main place and may recognize the current context of the user by using a unit behavior that is extracted at a predetermined place. Such as, the main place may be home, an office, a gymnasium, or the like.

Third, when the context recognizing unit 149 may frequently recognize the same unit behavior, the context recognizing unit 149 may recognize the current context of the user in consideration of a period of time when the same unit behavior is repeatedly recognized and a threshold value with respect to the same unit behavior. For example, when a unit behavior such as running is repeatedly recognized, if the threshold value is less than 20 minutes, the context recognizing unit 149 may recognize the current context of the user as 'going to work'. If the threshold value is more than 30 minutes, the context recognizing unit 149 may recognize the current context of the user as 'jogging'.

Fourth, the context recognizing unit 149 may recognize the current context of the user by using at least one of a day and a time when unit behaviors are recognized. For example, a unit behavior is repeatedly recognized on the same day or at the same time, the context recognizing unit 149 may recognize a context that is mapped with the day or the time as the current context of the user.

The first information providing IF unit 150 provides an interface for transmitting information regarding contexts recognized by the context recognizing unit 149 to the first application unit 160. The first information providing IF unit 150 includes a first message generating unit 151 and a first API unit 153. The first message generating unit 151 generates the information regarding context recognized by the context recognizing unit 149 as a message whose type is recognizable by the first application unit 160. The first API unit 153 may request the first application unit 160 to perform a corresponding service by using the generated message.

The first application unit 160 may provide the service corresponding to the current context recognized by the context recognizing unit 149, according to the request of the first API unit 153. If the first application unit 160 is related to advertisement, the first application unit 160 may provide appropriate advertisement for the current context to the user. For example, if the user is in the current context 'jogging', the first application unit 160 may provide drink advertisement or sport product advertisement. When the first application unit 160 is used in an industrial field, the first application unit 160 may recognize a context of a producer and may apply the context of the producer to a method of controlling a process. In addition, when the first application unit 160 provides a service related to medical treatment, the first application unit 160 may monitor and recognize a context of a patient, may find out an emergency or the like, and may take emergency measures of notifying surrounding people about the emergency or the like.

FIG. 5 is a block diagram of a second user device 500 for setting a context for each unit behavior of a user, according to another exemplary embodiment.

The second user device 500 of FIG. 5 may be a device communicates through a wired/wireless communication or may define unit behaviors of a user and user context corresponding thereto by using a plurality of sensors.

Referring to FIG. 5, the second user device 500 may include a second sensor unit 510, a second communication unit 520, a second storage unit 530, a context setting module 540, a second information providing interface (IF) unit 550, and a second application unit 560.

The second sensor unit 510, the second communication unit 520, the second storage unit 530, the context setting context setting module 540, the second information providing IF unit 550, and the second application unit 560 of FIG. 5 are mostly the same as the first sensor unit 110, the first communication unit 120, the first storage unit 130, the first context recognizing module 140, the first information providing IF unit 150, and the first application unit 160 of FIG. 1 and thus will not be described in detail.

The second sensor unit 510 may include a plurality of sensors in order to sense a state of a user of the second user device 500 and may provide a signal sensed by at least one sensor to the context setting context setting module 540. The second sensor unit 510 may include various types of sensors such as a location sensor, an acceleration sensor, a gyroscope a digital compass, an illumination sensor, a proximity sensor, an audio sensor, or the like.

The second communication unit 520 is a communication interface for providing various communication services such as a Bluetooth, a Wi-Fi, a 3G network service function, or the like.

The second storage unit 530 stores reference state transition graphs including at least one unit behavior group and context information mapped with the reference state transition graphs. The context information corresponding to the reference state transition graphs may be generated by a context setting unit 549.

The context setting context setting module 540 may include a second location tracker 541, a second signal processor 543, a second feature value extracting unit 545, a unit behavior setting unit 547, and the context setting unit 549.

The second signal processor 543 may analyze a signal provided from a location sensor for sensing a current location of a user, from among a plurality of sensors and may track the current location of the user in real time.

The second signal processor 543 may remove noise by processing an original signal provided from at least one sensor from among a plurality of sensors.

The second feature value extracting unit 545 may extract a feature value from a signal obtained by at least one sensor or a signal input from the second signal processor 543. Since the feature value is extracted from a signal corresponding to a unit behavior that is intentionally performed by the user in order to generate reference state transition graphs, the feature value varies according to each respective unit behavior.

The user may sequentially perform unit behaviors according to a predetermined pattern. The unit behavior setting unit 547 may set unit behaviors corresponding to feature values that are continuously extracted from the second feature value extracting unit 545 and are input to unit behavior setting unit 547. That is, a feature value extracted from a signal corresponding to a unit behavior that is intentionally performed by the user may be set to a corresponding unit behavior. The unit behavior setting unit 547 may form a unit behavior model by combining unit behaviors that is set to the extracted feature values. The unit behavior model is expressed as a feature space in which unit behaviors that are sequentially performed by the user are mapped with feature values corresponding to unit behaviors.

The context setting unit 549 may sets a special meaningful situation to a reference state transition graph formed by combining the set unit behaviors. The context setting unit 549 may set the current context of the user by using at least one four methods below.

First, the context setting unit 549 may generate the reference state transition graph by combining the unit behaviors set by the unit behavior setting unit 547 and may set the special meaningful situation to the generated reference state transition graph. For example, if a state transition graph that is generated during 'jogging' of the user is the second reference state transition graph of FIG. 4, the user inputs the context 'jogging' to the second reference state transition graph. In addition, the context setting unit 549 may map the input context with the second reference state transition graph and may store the input context mapped with the second reference state transition graph in the second storage unit 530. In this case, the context setting unit 549 may set the context in more detail by setting a threshold value to each of the unit behaviors.

Second, the context setting unit 549 may set context by combining locations tracked by the second location tracker 541 with recognized unit behaviors.

Third, the context setting unit 549 may set different contexts to the same unit behavior in consideration of a period of time when the same unit behavior is repeatedly recognized.

Fourth, the context setting unit 549 may set contexts in consideration of at least one of a day and a time when unit behaviors are set.

The context setting unit 549 may set a service appropriate for a context as well as the context to a group of unit behaviors.

The second information providing IF unit 550 may include a second message generating unit 551 and a second API unit 553 in order to transmit information regarding contexts set by the context setting unit 549 to the second application unit 560.

The second application unit 560 may provide a service corresponding to the current sate recognized by the context setting unit 549 according to a request of the second API unit 553. Alternatively, the second user device 500 may not include the second information providing IF unit 550 and the second application unit 560.

As described above, a user device according to one or more exemplary embodiments may recognize a current context of a user and may provide a service based on the current context. For example, the user device may recognize the current context by combining a behavior of a third party (e.g., surrounding people such as a robber, a thief, or the like) and a motion of an object (e.g., an automobile) as well as a behavior of the user of the user device. In addition, the user device may provide a service appropriate for the current context to a service target.

For example, when a user gets hit by a car, the user device may recognize the car accident from the user's scream, an image in that an object rapidly approaches the user device, or a sound. In this case, the user device may notify the service target (which may be a predetermined person or device, for example, a cellular phone of a family member or a police station) about the current context.

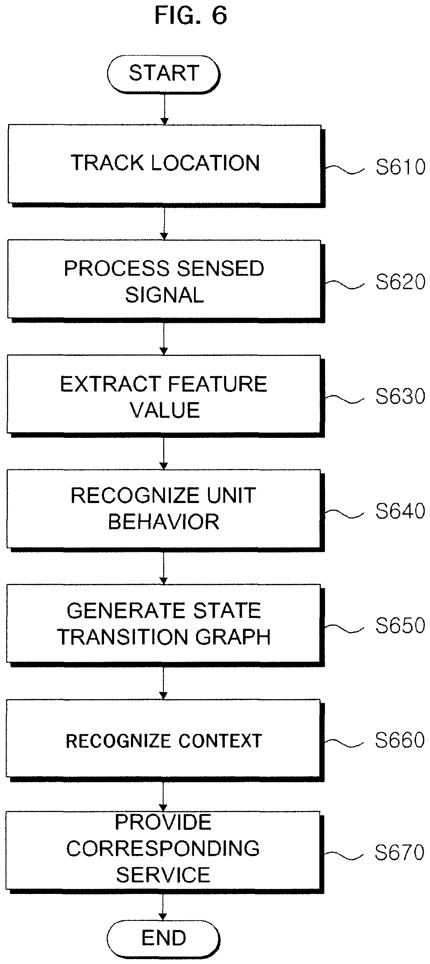

FIG. 6 is a flowchart of a method of recognizing a user context, which is performed by a user device, according to an exemplary embodiment.

The user device for performing the method of FIG. 6 may be the first user device 100 described with reference to FIG. 1 and may be substantially controlled by a controller (not shown) or at least one processor (not shown) of the first user device 100.

In operation S610, the user device may track a current location of a user by analyzing a signal that is provided from a location sensor for sensing a current location of a user from among a plurality of sensors included in the user device. The user device may separately store and manage a place where the user frequently visits by tracking the current location of the user.

In operation S620, the user device may remove noise by processing an original signal provided from at least one sensor from among a plurality of sensors.

In operation S630, the user device may extract a feature value from a signal obtained in operation S620. The feature value may be extracted in consideration of the window described with reference to FIG. 3.

In operation S640, the user device may recognize unit behaviors by analyzing feature values that are continuously extracted in operation S630. For example, the user device may recognize the unit behaviors corresponding to the extracted feature values by comparing the extracted feature values with a unit behavior model that is previously set. The recognized unit behaviors may include at least one selected from sitting, walking, running, a stop, being in transportation, walking upstairs, whether a user has a conversation, a unit behavior mapped with surrounding noise, a behavior recognized according to the brightness of a current place, and whether the user device is handled.

In operation S650, the user device may generate a state transition graph by combining the unit behaviors recognized in operation S640.

In operation S660, the user device may recognize the current context of the user from context information corresponding to a reference state transition graph that is most similar to the state transition graph generated in operation S650 from among reference state transition graphs that are previously set. In this case, the user device may recognize the current context of the user in consideration of a period of time when the same unit behavior is repeatedly recognized.

In Operations S650 and S660, the current sate is recognized by using the state transition graph. Alternatively, the user device may recognize the current context according to at least one of the tracked location of operation S610, a period of time when the same unit behavior is repeatedly recognized, and a day and a time when unit behaviors are recognized.

In operation S670, the user device may provide a service corresponding to the current context of the user.

Likewise, an exemplary embodiment may provide a method of providing a service according to a recognized user context. The method of providing a service may be changed in various forms. For examples, the user context may be recognized by combining a behavior of a third party (e.g., surrounding people such as a robber, a thief, or the like) and a motion of an object (e.g., an automobile) as well as a behavior of the user of a user device. In addition, a service appropriate for the current context may be provided to a service target.

For example, when a user gets hit by a car, the car accident may be recognized from the user's scream, an image in that an object rapidly approaches the user device, or a sound. In this case, the user device may notify a target (which may be a predetermined person or device, for example, a cellular phone of a family member or a police station) about the current context.

As another example, when a user meets a robber, the robbery may be recognized based on concepts contained in the robber's voice, an appearance of the robber, concepts contained in the user's voice, and the like. In this case, the user device may notify the service target about the robbery.

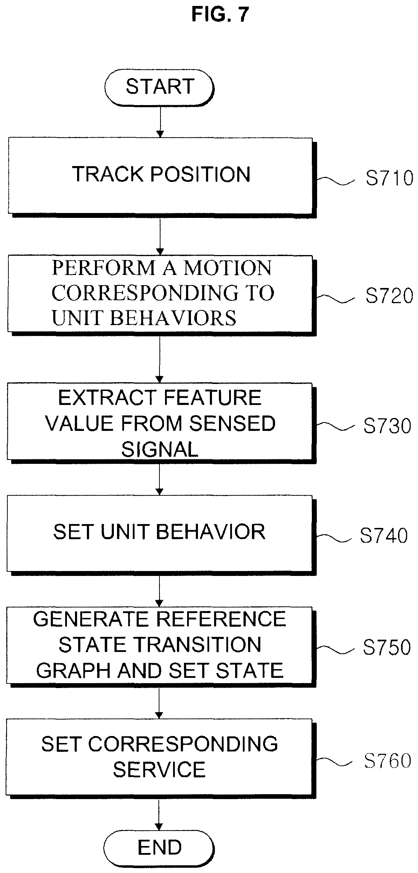

FIG. 7 is a flowchart of a method of setting a user context, which is performed by a user device, according to an exemplary embodiment.

The user device for performing the method of FIG. 7 may be the second user device 500 described with reference to FIG. 5 and may be substantially controlled by a controller (not shown) or at least one processor (not shown) of the second user device 500.

In operation S710, the user device may track a current location of a user by analyzing a signal that is provided from a location sensor for sensing a current location of a user from among a plurality of sensors included in the user device. The user device may separately store and manage a place where the user frequently visits by tracking the current location of the user.

In operation S720, the user performs a motion corresponding to unit behaviors. The user device may remove noise by processing an original signal provided from at least one sensor from among a plurality of sensors. The original signal is a signal obtained by sensing the motion of the user.

In operation S730, the user device may extract a feature value from a signal obtained in operation S720. Since feature values may be extracted from signals corresponding to unit behavior performed by the user, the feature values are different according to the unit behaviors.

In operation S740, the user device may set unit behaviors to feature values that are continuously extracted in operation 730 by using user's input and may form a unit behavior model by combining the extracted feature values and the unit behaviors corresponding thereto. For example, if the user performs a unit behavior that is walking and then a first feature value is extracted, the user may input the unit behavior that is walking to the first feature value and the user device may set the input unit behavior.

In operation S750, the user device may generate a reference state transition graph formed by combining the unit behaviors set in operation S740 and may set a special meaningful situation to the reference state transition graph. In this case, in order to generate a correct reference state transition graph as possible for each respective situation, the user reperforms unit behaviors that are performed in order to generate the reference state transition graph and the user device generates a temporal state transition graph from feature values of the reperformed unit behaviors. In addition, when the user device finds out errors when comparing the reference state transition graph that is previously generated with the temporal state transition graph that is later generated, the user device may correct the reference state transition graph by using the errors.

In operation S760, an appropriate service may be set for each respective set situation.

In the above-described apparatus and methods, a user context is recognized based on a behavior of the user. Alternatively, the user context may be recognized by recognizing a behavior of a third party or a motion of an object as well as the behavior of the user.

An exemplary embodiment may provide a method of providing a service according to a recognized user context. For example, according to above-described embodiments, a method of providing a service includes recognizing at least one behavior of an object and providing a service corresponding to the recognized behavior to a service target. In this case, the object may include at least one of a user of the user device, a third party other than the user, and an object. The service target may include at least one of the user of the user device, and a third party other than the user.

While exemplary embodiments have been particularly shown and described above, it will be understood by those of ordinary skill in the art that various changes in form and details may be made therein without departing from the scope of the inventive concept as defined by the following claims.

## Claims

1. A method of recognizing a user context, the method comprising:
recognizing (S640) at least one unit behavior sequentially generated by an object by analyzing a signal obtained by at least one sensor from among a plurality of sensors included in a user device (100), wherein a unit behavior refers to a unit of a motion of a user;
generating (S650) a state transition graph by combining of unit behaviors; and
recognizing (S660) a current context of the user from context information corresponding to a reference state transition graph that is most similar to the generated state transition graph, from among reference state transition graphs that are previously stored.

2. The method of claim 1, wherein the object comprises at least one of a user of the user device (100), a third party other than the user, and an object.

3. The method of claim 1, further comprising continuously extracting (S630) feature values indicating unit behaviors of the user that are obtained by the at least one sensor,
wherein the recognizing of the at least one unit behavior comprises recognizing the unit behaviors corresponding to the extracted feature values by respectively comparing the extracted feature values with unit behavior models that are previously set.

4. The method of claim 1, wherein the recognizing of the current context comprises:
when the same unit behavior is repeatedly recognized from among the at least one unit behavior, recognizing the current context of the user in consideration of a period of time when the same unit behavior is repeatedly recognized.

5. The method of claim 1, further comprising tracking (S610) a location of the user in real time by analyzing a signal provided from a location sensor for sensing the current location of the user, from among the plurality of sensors,
wherein the recognizing of the current context comprises recognizing the current context of the user in consideration of a unit behavior that is recognized in a specific location from among tracked location.

6. The method of claim 1, wherein the recognizing of the current context comprises, when the same unit behavior is repeatedly recognized, recognizing the current context of the user in consideration of a period of time when the same unit behavior is repeatedly recognized.

7. The method of claim 1, wherein the recognizing of the current context comprises recognizing the current context of the user in consideration of at least one of a day or a time when the at least one unit behavior is sensed.

8. The method of claim 1, wherein the recognizing of the at least one unit behavior comprises:
recognizing at least one from among sitting, walking, running, a stop, being in transportation, and walking upstairs by analyzing a signal provided from at least one of an acceleration sensor and a digital compass from among the plurality of sensors;
recognizing whether a user has a conversation and a degree of surrounding noise by analyzing a signal provided from an audio sensor for sensing sound from among the plurality of sensors; and
recognizing at least one of a unit behavior recognized according to brightness of a current place of the user and whether the user device (100) is handled by analyzing a signal provided from at least one of an illumination sensor and a proximity sensor from among the plurality of sensors.

9. A user device (100) for recognizing a user context, the user device (100) comprising:
a sensor unit (110) comprising a plurality of sensors;
a unit behavior recognizing unit (147) for recognizing unit behaviors that are sequentially generated by an object by analyzing a signal obtained by at least one sensor from among the plurality of sensors, wherein a unit behavior refers to a unit of a motion of a user:
a storage unit (130) for storing reference state transition graphs formed by combining of unit behaviors and situation information corresponding to the reference state transition graphs, and
a context recognizing unit (149) for generating a state transition graph by combining the at least one unit behavior and recognizing a current context of the user from context information corresponding to a reference state transition graph that is most similar to the generated state transition graph, from among the reference state transition graphs.

10. The user device (100) of claim 9, further comprising a feature value extracting unit (145) for continuously extracting feature values indicating unit behaviors of the user that are obtained by the at least one sensor,
wherein the unit behavior recognizing unit is configured to recognize the unit behaviors corresponding to the feature values by respectively comparing the feature values with unit behavior models that are previously set.

11. The user device (100) of claim 9, wherein the context recognizing unit (149), when the same unit behavior from among the at least one unit behavior is repeatedly recognized, is configured to recognize the current context of the user in consideration of a period of time when the same unit behavior is repeatedly recognized.

12. The user device (100) of claim 9, further comprising a location tracker (141) for tracking a location of the user in real time by analyzing a signal provided from a location sensor for sensing the current location of the user, from among the plurality of sensors.

13. The user device (100) of claim 12, wherein the context recognizing unit (149) is configured to perform at least one operation from among an operation of recognizing the current context of the user, based on a unit behavior that is recognized in a predetermined location from among tracked locations, an operation, when the same unit behavior is repeatedly recognized, recognizing the current context of the user in consideration of a period of time when the same unit behavior is repeatedly recognized, and an operation of recognizing the current context of the user by using at least one of a day and a time when the at least one unit behavior is recognized.

14. The user device (100) of claim 9, further comprising an application unit for providing a service corresponding to the current context of the user.

15. A computer readable recording medium having recorded thereon a program for executing the method of one of claims 1 - 8.

## Patentansprüche

1. Verfahren zum Erkennen eines Benutzerkontextes, wobei das Verfahren umfasst:
Erkennen (S640) wenigstens eines Einheitsverhaltens, das aufeinander folgend von einem Objekt erzeugt wird, indem ein Signal analysiert wird, das von wenigstens einem Sensor unter einer Vielzahl von Sensoren gewonnen wird, die in einer Benutzervorrichtung (100) enthalten sind, wobei ein Einheitsverhalten eine Einheit einer Bewegung des Benutzers betrifft;
Erzeugen (S650) einer grafischen Zustandsübergangsdarstellung durch Kombinieren von Einheitsverhalten und
Erkennen (S660) eines aktuellen Kontextes des Benutzers anhand von Kontextinformationen einer grafischen Bezugszustandsübergangsdarstellung, die der erzeugten grafischen Zustandsübergangsdarstellung am ähnlichsten ist, unter Bezugszustandsübergangsdarstellungen, die früher gespeichert wurden.

2. Verfahren nach Anspruch 1, wobei das Objekt wenigstens einen Benutzer der Benutzervorrichtung (100), einen Dritten außer dem Benutzer oder ein Objekt umfasst.

3. Verfahren nach Anspruch 1, das des Weiteren das kontinuierliche Extrahieren (S630) von Merkmalswerten umfasst, die Einheitsverhalten des Benutzers anzeigen, die durch den wenigstens einen Sensor gewonnen werden,
wobei das Erkennen des wenigstens einen Einheitsverhaltens das Erkennen der Einheitsverhalten entsprechend den extrahierten Merkmalswerten umfasst, indem die extrahierten Merkmalswerte jeweils mit Einheitsverhaltensmodellen verglichen werden, die vorher festgelegt werden.

4. Verfahren nach Anspruch 1, wobei das Erkennen des aktuellen Kontextes umfasst:
wenn das gleiche Einheitsverhalten wiederholt aus dem wenigstens einen Einheitsverhalten erkannt wird, Erkennen des aktuellen Kontextes des Benutzers in Anbetracht eines Zeitraums, in dem das gleiche Einheitsverhalten wiederholt erkannt wird.

5. Verfahren nach Anspruch 1, das des Weiteren das Verfolgen (S610) eines Standortes des Benutzers in Echtzeit durch Analysieren eines Signals umfasst, das von einem Standortsensor aus der Vielzahl von Sensoren zum Erfassen des aktuellen Standortes des Benutzers bereitgestellt wird,
wobei das Erkennen des aktuellen Kontextes das Erkennen des aktuellen Kontextes des Benutzers in Anbetracht eines Einheitsverhaltens umfasst, das an einem bestimmten Standort aus dem verfolgten Standort erkannt wird.

6. Verfahren nach Anspruch 1, wobei das Erkennen des aktuellen Kontextes, wenn das gleiche Einheitsverhalten wiederholt erkannt wird, das Erkennen des aktuellen Kontextes des Benutzers in Anbetracht eines Zeitraums umfasst, in dem das gleiche Einheitsverhalten wiederholt erkannt wird.

7. Verfahren nach Anspruch 1, wobei das Erkennen des aktuellen Kontextes das Erkennen des aktuellen Kontextes des Benutzers in Anbetracht von wenigstens einem Tag oder einer Zeit umfasst, wenn das wenigstens eine Einheitsverhalten erfasst wird.

8. Verfahren nach Anspruch 1, wobei das Erkennen des wenigstens einen Einheitsverhaltens umfasst:
Erkennen von wenigstens sitzen, gehen, laufen, anhalten, transportiert werden und hochgehen durch Analysieren eines Signals, das von wenigstens einem Beschleunigungssensor oder einem digitalen Kompass aus der Vielzahl von Sensoren bereitgestellt wird;
Erkennen, ob ein Benutzer eine Unterhaltung hat, und eines Grades von Umgebungsrauschen, indem ein Signal analysiert wird, das von einem Audiosensor zum Erfassen von Schall unter der Vielzahl von Sensoren bereitgestellt wird; und
Erkennen wenigstens eines Einheitsverhaltens, das entsprechend der Helligkeit eines aktuellen Platzes des Benutzers erkannt wird, oder ob die Benutzervorrichtung (100) bedient wird, indem ein Signal analysiert wird, das von wenigstens einem Beleuchtungssensor oder einem Näherungssensor unter der Vielzahl von Sensoren bereitgestellt wird.

9. Benutzervorrichtung (100) zum Erkennen eines Benutzerkontextes, wobei das Benutzervorrichtung (100) umfasst:
eine Sensoreinheit (110), die eine Vielzahl von Sensoren umfasst;
eine Einheitsverhaltenserkennungseinheit (147) zum Erkennen von Einheitsverhalten, die aufeinander folgend von einem Objekt erzeugt werden, indem ein Signal analysiert wird, das von wenigstens einem Sensor unter der Vielzahl von Sensoren gewonnen wird, wobei ein Einheitsverhalten eine Einheit einer Bewegung des Benutzers betrifft;
eine Speichereinheit zum Speichern von grafischen Bezugszustandsübergangsdarstellungen, die durch Kombinieren von Einheitsverhalten und Situationsinformationen entsprechend den grafischen Bezugszustandsübergangsdarstellungen gebildet werden, und
eine Kontexterkennungseinheit (149) zum Erzeugen einer grafischen Zustandsübergangsdarstellung durch Kombinieren von Einheitsverhalten und Erkennen eines aktuellen Kontextes des Benutzers anhand von Kontextinformationen entsprechend einer grafischen Bezugszustandsübergangsdarstellung, die der erzeugten grafischen Zustandsübergangsdarstellung unter den grafischen Bezugszustandsübergangsdarstellungen am ähnlichsten ist.

10. Benutzervorrichtung (100) nach Anspruch 9, die des Weiteren eine Merkmalswertextrahiereinheit (145) zum kontinuierlichen Extrahieren von Merkmalswerten umfasst, die Einheitsverhalten des Benutzers anzeigen, die durch den wenigstens einen Sensor gewonnen werden,
wobei die Einheitsverhaltenserkennungseinheit konfiguriert ist, um die Einheitsverhalten entsprechend den Merkmalswerten zu erkennen, indem die Merkmalswerte jeweils mit Einheitsverhaltensmodellen verglichen werden, die vorher festgelegt werden.

11. Benutzervorrichtung (100) nach Anspruch 9, wobei die Kontexterkennungseinheit (149), wenn das gleiche Einheitsverhalten aus dem wenigstens einen Einheitsverhalten wiederholt erkannt wird, konfiguriert ist, um den aktuellen Kontext des Benutzers in Anbetracht eines Zeitraums zu erkennen, in dem das gleiche Einheitsverhalten wiederholt erkannt wird .

12. Benutzervorrichtung (100) nach Anspruch 12, die des Weiteren einen Standortverfolger (141) zum Verfolgen eines Standortes des Benutzers in Echtzeit durch Analysieren eines Signals umfasst, das von einem Standortsensor zum Erfassen des aktuellen Standortes des Benutzers unter der Vielzahl von Sensoren bereitgestellt wird.

13. Benutzervorrichtung nach Anspruch 12, wobei die Kontexterkennungseinheit (149) konfiguriert ist, um wenigstens einen Vorgang aus einem Vorgang zum Erkennen des aktuellen Kontextes des Benutzers auf der Basis eines Einheitsverhaltens, das an einem vorgegebenen Standort unter den verfolgten Standorten erkannt wird, einen Vorgang, wenn das gleiche Verhalten wiederholt erkannt wird, wobei der aktuelle Kontext des Benutzers in Anbetracht eines Zeitraums erkannt wird, in dem das gleiche Einheitsverhalten wiederholt erkannt wird, oder einen Vorgang zum Erkennen des aktuellen Kontextes des Benutzers durchzuführen, indem wenigstens ein Tag oder eine Zeit verwendet wird, wenn das wenigstens eine Verhalten erkannt wird.

14. Benutzervorrichtung (100) nach Anspruch 9, die des Weiteren eine Anwendungseinheit zum Bereitstellen eines Dienstes entsprechend dem aktuellen Kontext des Benutzers umfasst.

15. Computerlesbares Aufzeichnungsmedium, auf dem ein Programm zum Ausführen des Verfahrens nach einem der Ansprüche 1 - 8 aufgezeichnet ist.

## Revendications

1. Procédé de reconnaissance d'un contexte d'utilisateur, le procédé consistant à:
reconnaître (S640) au moins un comportement d'unité généré séquentiellement par un objet en analysant un signal obtenu par au moins un capteur parmi une pluralité de capteurs inclus dans un dispositif d'utilisateur (100), dans lequel un comportement unitaire fait référence à une unité de mouvement d'un utilisateur;
générer (S650) un graphique de transition d'état en combinant des comportements unitaires; et
reconnaître (S660) un contexte courant de l'utilisateur à partir d'informations de contexte correspondant à un graphe de transition d'état de référence le plus similaire au graphe de transition d'état généré, parmi des graphes de transition d'état de référence précédemment stockés.

2. Procédé selon la revendication 1, dans lequel l'objet comprend au moins l'un d'un utilisateur de l'utilisateur un dispositif (100), un tiers autre que l'utilisateur et un objet.

3. Procédé selon la revendication 1, comprenant en outre l'extraction en continu (S630) de valeurs de caractéristiques indiquant les comportements unitaires de l'utilisateur qui sont obtenus par ledit au moins un capteur,
dans lequel la reconnaissance dudit au moins un comportement unitaire comprend la reconnaissance des comportements unitaires correspondant aux valeurs de caractéristiques extraites en comparant respectivement les valeurs de caractéristiques extraites avec des modèles de comportement unitaire précédemment définis.

4. Procédé selon la revendication 1, dans lequel la reconnaissance du contexte courant consiste à:
lorsque le même comportement unité est reconnu de façon répétée parmi au moins un comportement unitaire, reconnaître le contexte courant de l'utilisateur en considérant une période de temps où le même comportement unitaire est reconnu à plusieurs reprises.

5. Procédé selon la revendication 1, comprenant en outre le suivi (S610) d'un emplacement de l'utilisateur en réel temps en analysant un signal fourni par un capteur de position pour détecter l'emplacement courant de l'utilisateur, parmi la pluralité de capteurs,
dans lequel la reconnaissance du contexte courant comprend la reconnaissance du contexte courant de l'utilisateur en considérant un comportement unitaire qui est reconnu dans un emplacement spécifique parmi l'emplacement suivi.

6. Procédé selon la revendication 1, dans lequel la reconnaissance du contexte courant consiste, lorsque le même comportement unitaire est reconnu à plusieurs reprises, à reconnaître le contexte courant de l'utilisateur en considérant une période de temps où le même comportement unitaire est reconnu de manière répétée.

7. Procédé selon la revendication 1, dans lequel la reconnaissance du contexte courant consiste à reconnaître le contexte courant de l'utilisateur en considérant au moins un élément parmi un jour ou une heure auxquels ledit au moins un comportement unitaire est détecté.

8. Procédé selon la revendication 1, dans lequel la reconnaissance dudit au moins un comportement unitaire consiste à:
reconnaître au moins un élément parmi la position assise, la marcher, la course, l'arrêt, au cours d'un déplacement, et en montant un escalier en analysant un signal fourni par au moins l'un parmi un capteur d'accélération et d'un compas numérique parmi la pluralité de capteurs;
reconnaître si un utilisateur est en conversation et en présence d'un degré de bruit ambiant en analysant un signal fourni par un capteur audio pour détecter le son parmi la pluralité de capteurs; et
reconnaître au moins un comportement unitaire reconnu en fonction de la luminosité d'une place courante de l'utilisateur et si le Dispositif d'utilisateur (100) est géré en analysant un signal fourni par au moins l'un d'un capteur d'éclairage et d'un capteur de proximité parmi la pluralité des capteurs.

9. Dispositif d'utilisateur (100) pour reconnaître un contexte d'utilisateur, le dispositif d'utilisateur (100) comprenant:
une unité de détection (110) comprenant une pluralité de capteurs;
une unité de reconnaissance de comportement unitaire (147) pour reconnaître des comportements unitaires générés séquentiellement par un objet en analysant un signal obtenu par au moins un capteur parmi une pluralité de capteurs, dans lequel un comportement unitaire fait référence à une unité de mouvement d'un utilisateur;
une unité de stockage (130) pour stocker des graphiques de transition d'état de référence formés en combinant des comportements unitaires et des informations de situation correspondant aux graphiques de transition d'état de référence, et
une unité de reconnaissance de contexte (149) permettant de générer un graphique de transition d'état en combinant ledit au moins un comportement unitaire et en reconnaissant un contexte courant de l'utilisateur à partir d'informations de contexte correspondant à un graphique de transition d'état de référence qui est le plus proche du graphique de transition d'état généré, parmi les graphes de transition d'état de référence.

10. Dispositif d'utilisateur selon la revendication 1, comprenant en outre une unité d'extraction de valeurs de caractéristiques (15) pour extraire en continu de valeurs de caractéristiques indiquant les comportements unitaires de l'utilisateur qui sont obtenus par ledit au moins un capteur,
dans lequel l'unité de reconnaissance de comportement unitaire est configurée pour reconnaître les comportements unitaires correspondant aux valeurs de caractéristiques en comparant respectivement les valeurs de caractéristiques avec des modèles de comportement unitaire précédemment définis.

11. Dispositif d'utilisateur (100) selon la revendication 9, dans lequel l'unité de reconnaissance de contexte (149), lorsque le même comportement unitaire parmi ledit au moins un comportement unitaire est reconnu de façon répétée, est configuré pour reconnaître le contexte courant de l'utilisateur en tenant compte d'une période de temps lorsque le même comportement unitaire est reconnu de façon répétée.

12. Dispositif d'utilisateur (100) selon la revendication 9, comprenant en outre le suiveur d'emplacement (141) pour suivre un emplacement de l'utilisateur en réel temps en analysant un signal fourni par un capteur de position pour détecter l'emplacement courant de l'utilisateur, parmi la pluralité de capteurs.

13. Dispositif d'utilisateur (100) selon la revendication 12, dans lequel l'unité de reconnaissance de contexte (149) est configurée pour effectuer au moins une opération parmi une opération de reconnaissance de du contexte courant de l'utilisateur, sur la base d'un comportement unitaire reconnu dans un emplacement prédéterminé parmi les emplacements suivis, une opération, lorsque le même comportement unité est reconnu de façon répétée, de reconnaissance du contexte courant de l'utilisateur en considérant une période de temps où le même comportement unitaire est reconnu de façons répétée, et une opération de reconnaissance du contexte courant de l'utilisateur en utilisant au moins un jour et une heure auxquels ledit au moins un comportement est reconnu.

14. Dispositif d'utilisateur (100) selon la revendication 9, comprenant en outre une unité d'application pour fournir un service correspondant au contexte courant de l'utilisateur.

15. Support d'enregistrement lisible par ordinateur sur lequel est enregistré un programme pour l'exécution du procédé selon l'une des revendications 1-8.
